# EUROPEAN PATENT SPECIFICATION

(11) **EP 4 234 918 B1**
(45) Date of publication and mention of the grant of the patent: **25.12.2024**
(21) Application number: 22159030.0
(22) Date of filing: 25.02.2022
(51) Int. Cl.: F03D 1/06, F03D 13/10, F03D 13/30

(54) **BLADE ROOT DE-OVALIZATION METHODS AND ASSEMBLIES**
VERFAHREN ZUR BLATTWURZELENTOVALISIERUNG UND ANORDNUNGEN DAFÜR
PROCÉDÉS ET ENSEMBLES PERMETTANT LA DÉ-OVALORISATION DE PALE

(43) Date of publication of application: 30.08.2023
(73) Proprietor: LM Wind Power A/S, 6000 Kolding (DK)
(72) Inventor: KALLESTRUP, David, 6000 Kolding (DK); IBSEN, Christian, 6640 Vingen (DK); KARSBAEK, Brian, 6000 Kolding (DK)
(74) Representative: Bardehle Pagenberg S.L.

(56) References cited:
- EP-A1- 2 617 990
- WO-A2-2013/190140
- US-A- 3 961 516

## Description

The present disclosure relates to methods for adapting a cross-sectional shape of a root of a wind turbine blade. The present disclosure further relates to assemblies for adapting a cross-sectional shape of a root of a wind turbine blade and to wind turbine blades.

### BACKGROUND

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. Said rotation generates a torque that is normally transmitted through a rotor shaft to a generator, either directly ("directly driven" or "gearless") or through the use of a gearbox. This way, the generator produces electricity which can be supplied to the electrical grid.

The wind turbine hub may be rotatably coupled to a front of the nacelle. The wind turbine hub may be connected to a rotor shaft, and the rotor shaft may then be rotatably mounted in the nacelle using one or more rotor shaft bearings arranged in a frame inside the nacelle. The nacelle is a housing arranged on top of a wind turbine tower that may contain and protect the gearbox (if present) and the generator (if not placed outside the nacelle) and, depending on the wind turbine, further components such as a power converter, and auxiliary systems.

Wind turbine blades are usually made of composite materials. For example, reinforcing fibers such as glass fibers or carbon fibers may be covered or embedded in resin in a mold and then cured for forming two longitudinal blade half shells, e.g. an upwind half shell for the pressure side and a downwind half shell for the suction side. The two half shells may then be joined to form the blade shell. In other examples, a blade shell may be formed in a single step, e.g. a single mold may be used to manufacture the blade shell, without the need to join two blade half shells.

Wind turbine blades made of composite materials may not have sufficient structural integrity to provide a safe and strong attachment to the hub on its own, and therefore the blade root may include a metal blade flange, and bushings are usually arranged at the blade root. The root of the wind turbine blade may include a plurality of bushings embedded in a rim of the root, the bushings extending in a tip-root direction of the blade. Bolts or studs may be used to secure the blade to the hub, or to a pitch bearing arranged with the hub.

The pitch bearing may comprise an inner ring, an outer ring and a plurality of roller elements between the inner ring and the outer ring. The wind turbine blade may be attached either at the inner bearing ring or at the outer bearing ring, whereas the hub is connected at the other bearing ring. Sometimes, an extender may be additionally arranged between the blade and the hub, e.g. between the blade and the pitch bearing.

As the pitch bearing is circular and the blade flange is circular or annular as well, the blade root should have a substantially circular cross-section for being mounted to the hub as well. However, the blade root may lose its circularity between the molding of the blade and the attachment of the blade root flange. As a wind turbine blade may weigh tens of tons, e.g. 30, 40, 50 tons or more, the root may deform and adopt a more elliptical cross-section when stored. It may also happen that if the resin is not totally cured before extracting a wind turbine half of its mold, and thus the blade is softer than it should be, or if the composite material shrinks during curing, the blade root will also lose its circularity. Prior art examples are disclosed in EP2617990A1 and WO2013/190140A2.

The present disclosure aims at increasing a circularity of a blade root.

### SUMMARY

In an aspect of the present disclosure, a method for adapting a cross-sectional shape of a root of a wind turbine blade is provided. The method comprises providing a root flange configured to be mounted to the root of the wind turbine blade. The method further comprises arranging the root flange with the root of the wind turbine blade and joining a plurality of push elements to the root flange. The push elements are configured to push a wall of the root of the wind turbine blade. The method further comprises pushing the wall of the root of the wind turbine blade with one or more of the push elements.

According to this aspect, a root flange that is to be attached to a root of a wind turbine blade is used as a support for a plurality of push elements. When the root flange is in an appropriate position, e.g. sufficiently close or next to a root end, or inside the blade root, the push elements may be used to change the cross-section of the blade root. For instance, a more circular or a substantially circular cross-section may be obtained.

As a root flange installation process is combined with a de-ovalizing procedure, processing time may be reduced. Also, a finer control and more versatility may be obtained than with other methods for de-ovalizing a wind turbine blade root, for example if tools having a length of about a diameter of a blade root or tools configured to push towards an entirety of an inner wall of a blade root at a same time are used. Adaptation of the cross-section of the root of a wind turbine blade may also be easier and safer with respect to other de-ovalization methods, as the dimensions and weight of the push elements may be smaller than the tools used in other methods.

Throughout this disclosure, a root flange may be understood as an element to be attached to a root of a wind turbine blade, e.g. to a root end or to an inside wall at or near the root. The root flange has a strengthening or stiffening function, e.g. to avoid or limit blade root deformation, and/or may serve as a stopper for avoiding people or objects falling to an inside of a wind turbine blade. In some examples, a root flange may be a ring-shaped body or a disc-shaped body. In some examples, the root flange may be a bulkhead. The root flange may have at least one surface to which at least two push elements may be attached for pushing a wall portion of a blade root.

Throughout this disclosure, a push element may be understood as an element, e.g. a device or tool, that is configured to push a portion of a wall, e.g. an inner wall, of a root of a wind turbine blade. The push elements may be configured particularly for pushing a (portion of a) blade root radially outwards. The push elements may comprise a push surface for contacting such a wall and pushing it for changing a cross-sectional shape of the blade root. It may be understood that the push element is also configured to be attached to a root flange. In some examples, a push element may be any suitable type of jack. The push elements may be activated manually or may include a power source or may be connected to a power source for activating and/or driving a pushing action.

In a further aspect of the present disclosure, an assembly for adapting a cross-sectional shape of a root of a wind turbine blade is provided. The assembly comprises a root flange configured for a root of a wind turbine blade. The assembly further comprises a plurality of push elements attached to the root flange such that the push elements are arranged to push a wall of the root of the wind turbine blade radially outwards.

In yet a further aspect of the present disclosure, a method for de-ovalizing a root of a wind turbine blade is provided. The method comprises moving a root platform assembly comprising a root platform and a plurality of push elements secured to the root platform towards the root of the wind turbine blade. The method further comprises pushing an inner wall of the root of the wind turbine blade with one or more of the push elements.

### BRIEF DESCRIPTION OF THE DRAWINGS

Figure 1 illustrates a perspective view of one example of a wind turbine;
Figure 2 illustrates a perspective view of one example of a blade of the wind turbine of figure 1;
Figure 3 shows a flow chart of an example of a method for adapting a cross-sectional shape of a root of a wind turbine blade;
Figure 4 schematically illustrates an example of a deformed blade root and a root flange to be attached to the blade root;
Figure 5 schematically illustrates an example of a longitudinal cross-section of a blade root with a root flange next to the end of the blade root;
Figure 6 schematically illustrates an example of a longitudinal cross-section of a blade root with a root flange inside the blade root;
Figure 7 schematically illustrates an example of a side view of an inside of a wind turbine blade root having a root flange next to the root end, specifically of a region close to an inner wall of the blade root;
Figure 8 schematically illustrates an example of a perspective view of a root flange being moved along a rod comprised in a root end of the blade root;
Figure 9 schematically illustrates an example of a top view of a root flange with a plurality of push elements attached;
Figure 10 schematically illustrates an example of a root portion of an upwind blade shell and a downwind blade shell; and
Figure 11 shows a flow chart of an example of a method for de-ovalizing a root of a wind turbine blade.

### DETAILED DESCRIPTION OF EXAMPLES

Reference now will be made in detail to embodiments of the present disclosure, one or more examples of which are illustrated in the drawings. Each example is provided by way of explanation only, not as a limitation. In fact, it will be apparent to those skilled in the art that various modifications and variations can be made in the present disclosure. For instance, features illustrated or described as part of one embodiment can be used with another embodiment to yield a still further embodiment. Thus, it is intended that the present disclosure covers such modifications and variations as come within the scope of the appended claims.

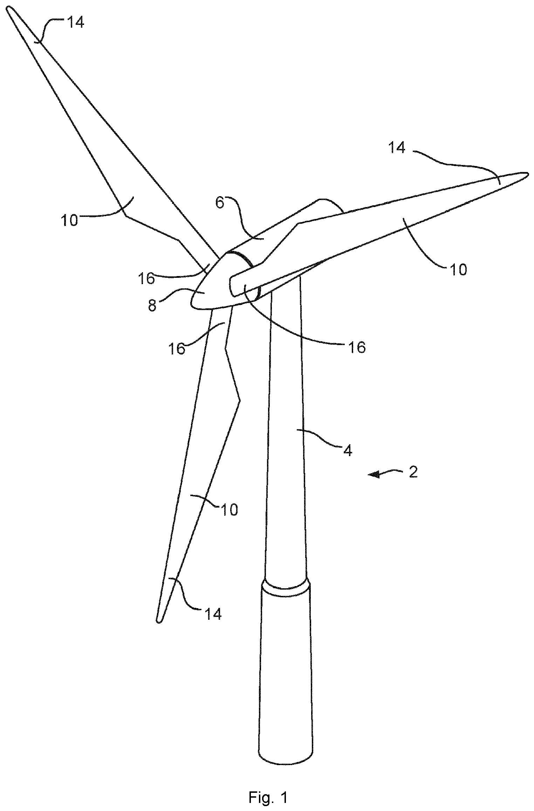

Fig. 1 illustrates a conventional modern upwind wind turbine 2 according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8.

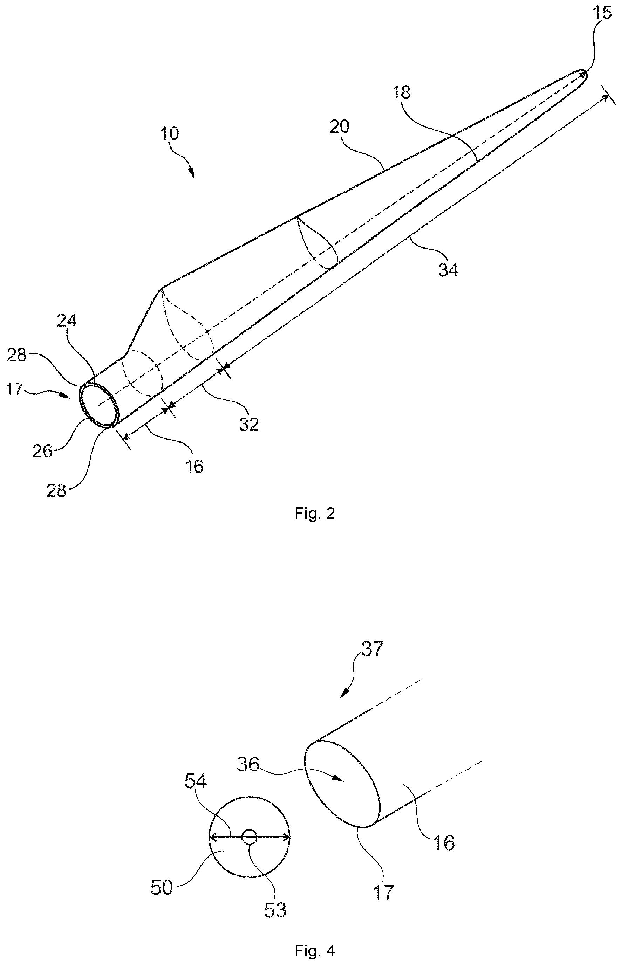

Fig. 2 shows a schematic view of an exemplary wind turbine blade 10. The wind turbine blade 10 has the shape of a conventional wind turbine blade with a root end 17 and a tip end 15 and comprises a root region 16 closest to the hub, a profiled or an airfoil region 34 furthest away from the hub and a transition region 32 between the root region 16 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34, also called the profiled region, has an ideal or almost ideal blade shape with respect to generating lift, whereas the root region 16, due to structural considerations, has a substantially circular or elliptical cross-section, which for instance makes it easier and safer to mount the blade 10 to the hub. The diameter (or the chord) of the root region 16 may be constant along the entire root area 16. The transition region 32 has a transitional profile gradually changing from the circular or elliptical shape of the root region 16 to the airfoil profile of the airfoil region 34. The chord length of the transition region 32 typically increases with increasing distance from the hub. The airfoil region 34 has an airfoil profile with a chord extending between the leading edge 18 and the trailing edge 20 of the blade 10. The width of the chord decreases with increasing distance from the hub.

A shoulder 40 of the blade 10 is defined as the position, where the blade 10 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub. The wind turbine blade 10 comprises a blade shell comprising two blade shell parts or half shells, a first blade shell part 24 and a second blade shell part 26, typically made of fiber-reinforced polymer. The wind turbine blade 10 may comprise additional shell parts, such as a third shell part and/or a fourth shell part. The first blade shell part 24 is typically a pressure side or upwind blade shell part. The second blade shell part 26 is typically a suction side or downwind blade shell part. The first blade shell part 24 and the second blade shell part 26 are fastened together with adhesive, such as glue, along bond lines or glue joints 28 extending along the trailing edge 20 and the leading edge 18 of the blade 10. Typically, the root ends of the blade shell parts 24, 26 have a semi-circular outer cross-sectional shape.

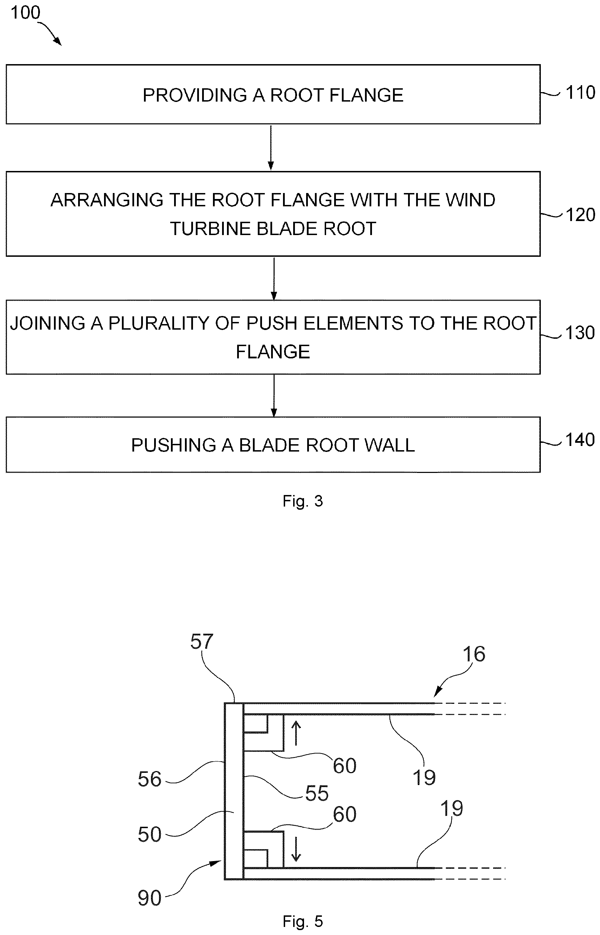

In an aspect of the present disclosure, a method 100 for adapting a cross-sectional shape of a root 16 of a wind turbine blade 10 is provided. The method 100 is schematically shown in the flow chart of figure 3.

The method comprises, at block 110, providing a root flange 50 configured to be mounted to the root 16 of the wind turbine blade 10. The method further comprises, at block 120, arranging the root flange 50 with the root 16 of the wind turbine blade 10. The method further comprises, at block 130, joining a plurality of push elements 60 to the root flange 50, the push elements 60 being configured to push a wall 19 of the root 16 of the wind turbine blade 10. The method further comprises, at block 140, pushing the wall 19 of the root 16 of the wind turbine blade 10 with one or more of the push elements 60.

The steps of this method may be performed at a factory, while the blade shell is being manufactured, or later on, e.g. after the blade has been stored during some days, weeks or months. In other examples, the steps of the method may be performed in the field, e.g. after the blade has been transported to its installation location.

With such methods, a cross-sectional shape of a blade root 16 may be improved. For instance, if a blade root has been deformed, e.g. after unmolding, a suitable cross-sectional shape may be obtained, e.g. for enabling a successful coupling of the blade to a wind turbine hub. In addition, an element which is to be attached to the blade root 16, namely a root flange 50, can be used as a support for the plurality of pushing elements 60. A better and more efficient use of resources may be achieved, e.g. less time and less tools may be required. For example, attaching several relatively small pushing devices 60 to a root flange 50 that has to be joined to the blade root 16 and pushing with them may be more efficient than using one or a few large pushing devices for de-ovalizing the blade root and, separately, join the root flange 50. In this example, a large pushing device may for example have a length of about a diameter of a cross-section of a blade root 16. For example, if the blade shell has lost its circular shape in one or more relatively small portions of the root, smaller push elements may provide force and compensation of the deformation where it is needed.

Figure 4 schematically shows an example of a deformed blade root 16 and a root flange 50 to be attached to the blade root. The blade root 16 of this figure may not be suitable to be joined to a hub of a wind turbine 2, as a more circular cross-section of the root 16 may be required. An example of a root flange 50 may also be seen in this figure. The root flange 50 has a disc shape and a substantially circular cross-section, and it is to be attached to the blade root 16, specifically to the root end 17. As the cross-sectional shape of the blade root 16 is not circular in this example, the root flange 50 cannot be properly joined to the blade root 16. In addition, it may be difficult or even impossible to mount such a blade to a wind turbine hub.

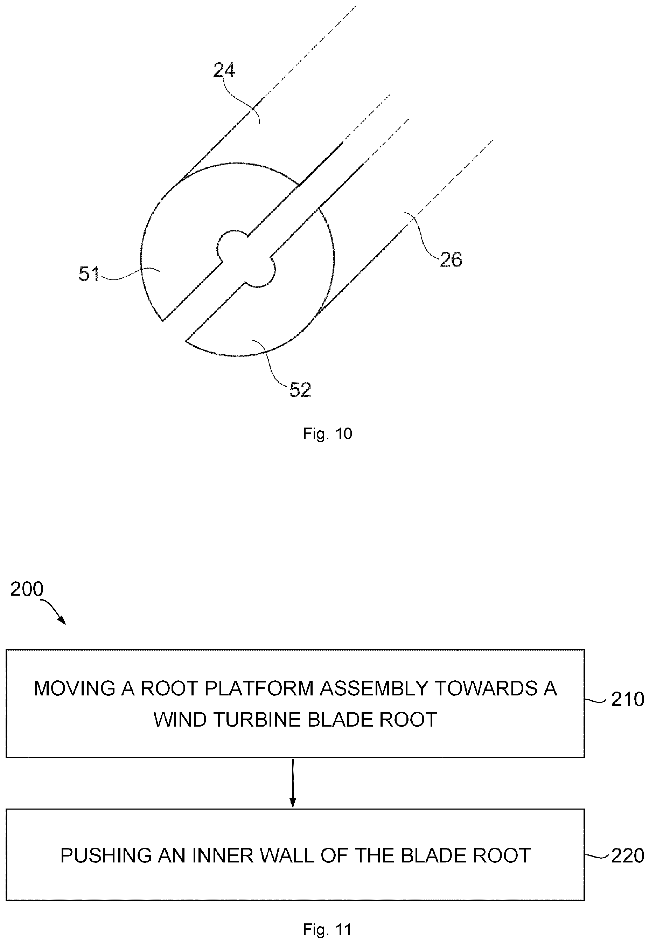

Although the root flange 50 has a substantially circular cross-section in the example of figure 4, a root flange 50 may have other suitable shapes and cross-sections. For instance, if the root flange 50 is a bulkhead, the root flange may have a disc shape, but also a cylindrical shape or other appropriate shape depending on the bulkhead. Or if the root flange 50, instead of being provided as an integral piece, is provided in separate portions, e.g. in an upwind portion 51 and a downwind portion 52 (see figure 10), each portion may e.g. have a semi-circular cross-section.

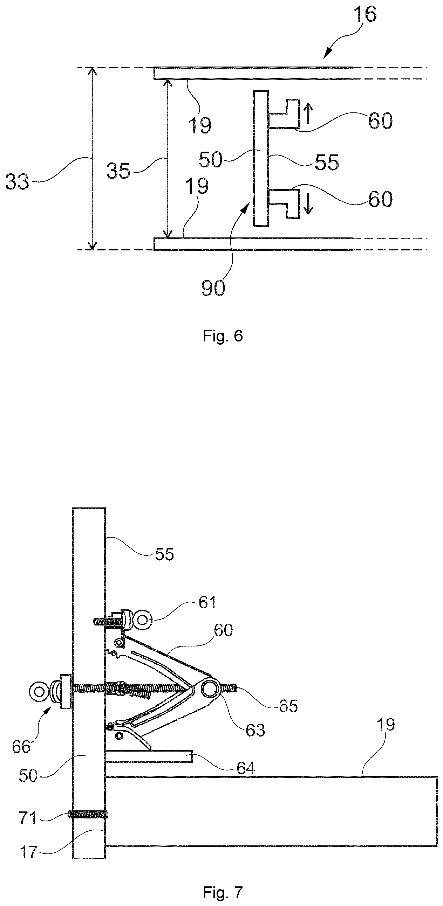

Figures 5 and 6 schematically illustrate a longitudinal cross-section of a blade root 16. The root flange 50 is configured to be attached to a root end 17 of the blade 10 in figure 5, e.g. with a plurality of bolts 71, see figure 7. The root flange 50 may comprise a plurality of through holes to this end. The root flange 50 is configured to be attached to an inner wall of the blade root 16 in figure 6. A suitable sealant to be arranged between the inner wall of the blade and the root flange 50 may be used to attach the root flange to the inner wall.

The root flange may be configured to fill, in cross-section, a root 16 of a wind turbine blade 10 when the root has a suitable, e.g. circular, shape. For example, a root flange having a circular cross-section may have a diameter 54 of about an outer diameter 33 of the blade root, see figure 5, or about an inner diameter 35 of the root flange, see figure 6. A joining element, e.g. a sealant or an adhesive, may be used to join the root flange 50 to a wall 19 of the blade root 16 in the example of figure 6. In other examples, a root flange 50 may have a size, in cross-section, much smaller than an inner diameter 35 of the blade root 16.

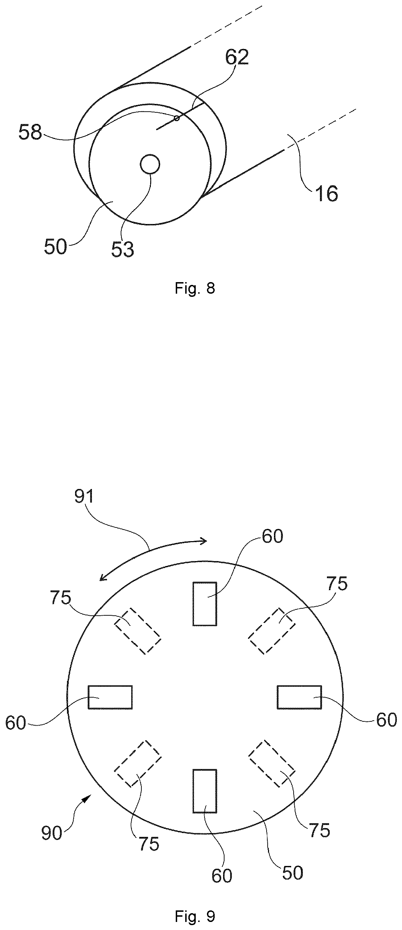

When the root flange 50 has a circular cross-section, the root flange may comprise a hole 53 in a circle center of the root flange. A through hole in the root flange may be configured to allow passage to one side to the opposite side of the root flange. An operator may therefore be able to move between one side and the other side of the root flange 50, going through the root flange. When the blade root 16 has a suitable cross-sectional shape, e.g. a circular cross-section, and the root flange 50 is attached to the blade root, the hole or opening 53 may provide passage in a root-tip direction of the blade. In this way, an operator may access an inside of the blade 10 by going through the opening 53 of the root flange. A hatch for covering or closing the hole or opening 53 may be provided with, or attached to, the root flange 50. A root flange hole 53 for the passage of an operator may for example have a circular cross-section and have a diameter of about one meter. Such an opening 53 may be provided in a center of a root flange regardless a cross-sectional shape of the root flange 50. It may also be possible to provide such a through hole 53 in another portion of the root flange, e.g. in a less centric position. In general, a hole for the passage of an operator may be provided in any suitable location of the root flange. Similarly, a root flange 50 does not need to include such a hole 53. For example, the root flange 50 of figure 9 does not include it.

Arranging 120 the root flange 50 may, in some examples, comprise inserting the root flange in an inside 36 of the root 16 of the wind turbine blade. For instance, the root flange is inserted in an inside of the blade root 16 in the example of figure 6. In some of these examples, the root flange may be a bulkhead. Depending on the type of root flange 50 to be used, the root flange 50 may be inserted into an inside 36 of the blade root or not.

In this example, the root flange may be circular or annular but with a diameter that is smaller than a local internal diameter of the blade root. The perimeter of the root flange may be connected to the inside of the blade root, specifically once the blade root has been given a substantially circular shape.

In some examples, joining 130 may comprise joining the plurality of push elements 60 to a surface 55 of the root flange 50 which, upon adapting (finishing the adaption) the cross-sectional shape of the root 16 of the wind turbine blade 10, faces a tip 15 of the wind turbine blade 10. This may allow to effectively push a wall 19 of blade root 16 and to appropriately approach and join the root flange 50 to the blade root 16.

The push elements 60 may be specifically joined to a portion of that surface 55 which is configured to be adjacent to a root plane, e.g. to the wall 19 of the root 16, of the wind turbine blade 10. In the example of figure 5, two push elements 60 are attached to surface 55 of the root flange 50, but each push element 60 is closer, in cross-section, to an external edge of the root flange 50 than to a center of the root flange 50. Therefore, a finer control of pushing may be achieved. Also, in comparison with other methods for de-ovalizing, a size of the push elements may be greatly reduced.

Figure 7 schematically illustrates a side view of an inside of a wind turbine blade root, in particular of a region close to an inner wall 19 of the blade root 16. The push elements may be jacks. In this specific example, a scissor jack having a ball joint 63 is used. The jacks 60 have a push surface 64 to contact a portion of a wall of blade shell. The push surface 64 may be configured to distribute the pushing forces over the inner surface of the root.

Any suitable type of jack may be used. In the example of figure 7, the jacks are attached close to an edge, e.g. a circumferential outside edge, of a surface of the root flange 50 which will be facing a tip of the wind turbine blade once a suitable cross-section of the blade root is obtained. A fastener, e.g. a bolt, 61 is used to join the push element 60, specifically an end of the push element opposite to the push surface 64, to the root flange 50. More than one fastener may be used. A screw 65 is provided for enabling the ball joint 63 of the jack be displaced horizontally. The horizontal movement changes the angle between the legs of the jack and therefore moves the push surface 64 close to a wall 19 of the root blade. Intermediate elements 66 such as a thrust bearing and one or more washers may be provided.

Pushing 140 may comprise pushing towards an outside 37 of the wind turbine blade 10, e.g. radially outwards, see for example the arrows in figure 6. In other examples, the push elements may push towards an inside 36 of the wind turbine blade, e.g. radially inwards, or both towards and inside and an outside of the blade. Depending on the dimensions of a root flange 50, it may be possible to attach two or more push elements 60 to the root flange 50 such that one or more pushing devices 60 may be used to push towards an inside 36 of the wind turbine blade whereas one or more other pushing devices may be used to push towards an outside 37 of the blade. For example, if the root flange has a disc shape or a cylindrical shape, and therefore has two opposite axial surfaces 55, 56 and a radial surface 57 extending between the two opposite axial surfaces 55, 56, one or more push elements 60 may be attached to a radial surface 57. Additionally or alternatively, a push element 60 may be attached to an axial surface 56 which is to face away from a blade tip 15 once a desired blade root cross-section has been achieved. Attachment may be direct, e.g. without intermediate pieces or elements, or may be indirect, e.g. with an intermediate element such as an extendible arm connecting the root flange 50 and a push element 60.

In some examples, pushing 140 may comprise actuating one of the push elements at a different time than another of the push elements 60. One or more push elements 60 may be actuated during a first period of time, and one or more push elements may be actuated during a second period of time. The second period of time may be subsequent to the first period of time or may be partially overlapping with the first period of time. Control and adaptation over the de-ovalization process may be increased. An operator may actuate, e.g. directly actuate, one or more push elements. In other examples, actuation may be remote.

Figure 8 schematically illustrates a perspective view of a root flange 50 being moved along a rod 62 comprised in a root end 17 of the blade root 16. In some examples, the blade root may have a plurality of bushings configured to receive a plurality of studs through which the blade root is to be coupled to a wind turbine hub 8. If the blade root has not a suitable cross-sectional shape, it may not be possible to insert the root flange in blade root studs already provided in the blade root. Therefore, only a few studs, e.g. one, two, three or more studs may be provided with the blade root 16 before the root flange 50 is moved towards the blade root. These studs may be inserted into bushings of the blade root before the root flange is moved towards the blade root and moved along the studs, and the remaining bushings may be left empty. The studs in this example have the function of arranging the flange with the blade root in a precise position. Other rods, e.g. guiding pins may be used to position a root flange with respect to the blade root.

Therefore, arranging 120 the root flange may, in some examples, comprise inserting one or more rods 62 in the root of the wind turbine blade and in corresponding holes 58 of the root flange 50. The holes 58 are configured to receive the rods 62. The rods 62 may be studs or guiding pins. Blade root studs may be shorter than the guiding pins. Once the blade root 16 has all its necessary studs, the blade 10 may be coupled to the wind turbine hub 8 (or pitch bearing) through the studs. A number of guiding pins, if used at all, may be much lower of a number of studs. Two or more guiding pins may be attached to the blade root end 17 for easing and better controlling an installation of the blade to the hub. During blade installation, the guiding pins may be inserted into the hub first, and the studs may be inserted afterwards, once the blade is closer to, and aligned with, the hub 8. Rods 62 may therefore be one or more of studs and guiding pins.

The push elements 60 may be joined to the root flange 50 after the root flange has been moved close to the wind turbine blade 10, or they may be joined before. In the example where the root flange 50 is slid through one or more rods 62, the plurality of push elements 60 may be attached to the root flange before displacing the root flange along the rods, or may be attached after the sliding along the rods has begun, e.g. after the root flange is besides the root end 17. Both options may also be combined, such that some push elements 60 may be joined before the root flange is slid along the rods, and some push elements 60 may be joined afterwards, e.g. once the root flange is closer to, or next to, the root end 17. It is also possible to join one or more push elements to the root flange at any moment if deemed necessary. For example, if the root flange 50 is besides the root end 17, one or more additional push elements may be joined if deemed suitable. Likewise, if may be possible to change a position of one or more push elements at any time, i.e. at what portion of the root flange 50 they are joined to, if deemed suitable. The reorganization of the push elements, both in terms of number and location on the root flange, may be performed regardless the root flange 50 is to be attached to a root end 17, see figure 5, or to an inside of the blade, see figure 6.

In some examples, the method 100 may further comprise securing the root flange 50 to the wind turbine blade root 16 after the wind turbine blade root attains a suitable cross-sectional shape, e.g. a substantially circular cross-sectional shape. Securing elements 71 such as bolts, see figure 7, may be used. Securing elements may also be non-mechanical. Bonding elements such as adhesive may be provided, e.g. for joining a bulkhead to an inner wall of a root blade. Also, both mechanical and non-mechanical securing elements may be used simultaneously.

The method may further comprise detaching the plurality of push elements 60 from the root flange 50. When a desired cross-section of a blade root 16 has been achieved, the push elements may be removed. The dimensions of the root flange 50 may be such that, once that it has been attached to the blade root 16, it confers rigidity to the blade root, e.g. to a root end 17, and minimizes the deformation of the blade root. The push elements 60 may e.g. be removed through the central hole or opening 53 of the root flange. In other examples, the push elements, or at least some of them, may be left attached to the root flange. For instance, some or all the push elements may be kept attached to the root flange during transportation of the blade to a wind turbine installation site.

The wind turbine blade 10 may comprise an upwind blade shell, e.g. a pressure side blade shell, and a downwind blade shell, e.g. a suction side blade shell. Figure 10 shows an example of root portion of an upwind blade shell 24 and a downwind blade shell 26. It may be possible to attach a root flange to the blade shells before the shells 24, 26 are joined. In these examples, deformation of the blade root 16 may be prevented as a root flange may keep a desired cross-sectional shape of the blade root already before the blade is removed from a mold and stored. In these examples, the root flange 50 may comprise an upwind root flange portion 51 and a downwind root flange portion 52. Arranging 120 may comprise attaching the upwind root flange portion 51 to the upwind blade shell 24 and attaching the downwind root flange portion 52 to the downwind blade shell 26. Joining 130 may be performed before attaching the upwind blade shell 24 and the downwind blade shell 26 to form the wind turbine blade 10.

In a further aspect of the disclosure, an assembly 90 for adapting a cross-sectional shape of a root 16 of a wind turbine blade 10 is provided. The assembly 90 comprises a root flange 50 configured for a root 16 of a wind turbine blade 10. The assembly 90 further comprises a plurality of push elements 60 attached to the root flange 50 such that the push elements 60 are arranged to push a wall 19 of the root 16 of the wind turbine blade 10 radially outwards. Examples of such an assembly 90 may be seen in figures 5, 6 and 10.

Figure 9 schematically shows a top view of a root flange 50 with a plurality of push elements attached 60. The root flange 50 may, in some examples, comprise a plurality of mounting points 75. The mounting points may be spaced about a circumferential direction 91. The mounting points may be provided radially outwards. Other locations of the mounting points may also be possible. The schematic example of figure 9 shows 8 mounting points 75, four to which push elements 60 have been joined, and for which have been left free. In some examples, between 20 and 30, e.g. 24 or 26 mounting points 75, may be provided. In other examples, between 6 and 20, e.g. 12 mounting points, may be provided.

A mounting point or mounting region 75 may be understood as a portion of a root flange to which a push element 60 may be attached. A suitable number and location of mounting points 75 may for example be determined by computer simulations. Visual marks may be provided on a root flange as indicators of the mounting points 75. Paint or adhesive tape may for example be used as visual marks. Mounting points 75 may also be provided by holes or receptacles. For instance, a root flange may be provided with holes for the insertion of fasteners 61 and pins 65, see figure 7. Other suitable visual marks may be provided.

Depending on how a blade root 16 is deformed, a different number and a different location of push elements may be required. In some examples, a same number of push elements 60 than a number of available mounting points 75 may be provided. In other examples, a number of push elements 60 may be less than a number of mounting points 75. That is to say, depending on how the blade root 16 is deformed, more or less push elements 60 may be attached to the root flange 50, and its location may also be adjusted as required. Providing mounting points 75 in root flanges 50 may allow adaptability and efficacy for the de-ovalization process.

The plurality of push elements 60 may be arranged in pairs of push elements. In figure 9, two pairs of opposing push elements may be seen attached to the root flange. Each pair is formed by two push elements 60 arranged in radially opposing mounting points 75 in this example. Each pair of push elements may comprise one push element to push against an upwind blade shell 24, and another push element to push against a downwind blade shell 26. The pairs of push elements may be arranged in diametrically opposite positions. A good balance between weight and effectivity in de-ovalizing may be obtained by providing between 2 and 12 pairs of push elements 60. Thus, 4, 5 or 6 pairs of push elements may be provided.

A dimension of the push elements 60, in a direction of pushing, may be about or less than a 20%, specifically about or less than a 10%, of a diameter of the root of the wind turbine blade. Such a dimension of the push elements may e.g. be measured in a most compressed state of the push elements. An inner diameter of the de-ovalized blade root may be used as a reference in some examples. A dimension of the push elements 60, in a direction of pushing, may similarly be about or less than a 20%, specifically about or less than a 10%, of a diameter 54 of the root flange 50.

The description and explanations of the push elements 60 and the root flange 50 regarding method 100 also applies to assembly 90, and *vice versa.* For example, a direction of attachment of the push elements 60 and the root flange 50 may be substantially perpendicular to a direction of pushing. In the example of figure 9, the direction of attachment would be axial, i.e. perpendicular to plane of the figure, and the direction of pushing would be radial. Also, as shown in the example of figure 2, the root flange 50 may comprise a through hole 53, e.g. a central opening, for moving one or more push elements 60 from a side of the root flange to an opposite side of the root flange. The push elements may be scissor jacks.

A wind turbine blade 10 comprising an assembly 90 as described herein may also be provided.

In a further aspect of the disclosure, a method for de-ovalizing a root of a wind turbine blade is provided. De-ovalizing may be understood as increasing a circularity of a cross-section of a blade root 16. Method 200 is shown in the flow chart of figure 11. Aspects and explanations with respect to method 100 and assembly 90 may be combined and applied to method 200 and *vice versa.*

The method comprises, at block 210, moving a root platform assembly 90 comprising a root platform 50 and a plurality of push elements 60 secured to the root platform 50 towards the root 16 of the wind turbine blade 10. Moving the root platform assembly 90 may comprise sliding the root platform 50 along one or more studs of the root of the wind turbine blade. The root platform assembly may be moved towards the blade root until at least a portion of the root platform touches the blade root. The plurality of push elements may be a plurality of jacks.

In some examples, the plurality of push elements 60 may be secured to an outer portion, e.g. to an outer radial portion, of a surface 55 of the root platform which, after de-ovalizing, is perpendicular to a root-tip direction of the wind turbine blade. The platform 50 may have a circular cross-section, e.g. the platform may have a disc shape.

The method further comprises, at block 220, pushing an inner wall 19 of the root 16 of the wind turbine blade 10 with one or more of the push elements 60. Pushing may be performed after the platform assembly 90 is next to a root end 17. One or more operators may manually act on one or more push elements for causing them to move towards the inner wall.

The method may further comprise bolting the platform 50 to the root of the wind turbine blade at least partly after de-ovalizing the root of the wind turbine blade. The platform 50 may therefore be attached to the root of the wind turbine blade.

This written description uses examples to disclose a teaching, including the preferred embodiments, and also to enable any person skilled in the art to put the teaching into practice, including making and using any devices or systems and performing any incorporated methods. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various embodiments described, as well as other known equivalents for each such aspects, can be mixed and matched by one of ordinary skill in the art to construct additional embodiments and techniques in accordance with principles of this application. If reference signs related to drawings are placed in parentheses in a claim, they are solely for attempting to increase the intelligibility of the claim, and shall not be construed as limiting the scope of the claim.

## Claims

1. A method (100) for adapting a cross-sectional shape of a root (16) of a wind turbine blade (10), the method comprising:
providing (110) a root flange (50) configured to be mounted to the root (16) of the wind turbine blade (10);
arranging (120) the root flange (50) with the root (16) of the wind turbine blade (10);
joining (130) a plurality of push elements (60) to the root flange (50), the push elements (60) being configured to push a wall (19) of the root (16) of the wind turbine blade (10); and
pushing (140) the wall (19) of the root (16) of the wind turbine blade (10) with one or more of the push elements (60).

2. The method of claim 1, wherein joining (130) comprises joining the plurality of push elements (60) to a surface (55) of the root flange (50) which, upon adapting the cross-sectional shape of the root (16) of the wind turbine blade (10), faces a tip (15) of the wind turbine blade (10); and specifically to a portion of the surface configured to be adjacent to a root plane of the root (16) of the wind turbine blade (10).

3. The method of claim 1 or claim 2, wherein the root flange (50) has a substantially circular cross-section, optionally comprising a hole (53) in a circle center of the root flange (50).

4. The method of any of claims 1 - 3, wherein pushing (140) comprises pushing radially outwards.

5. The method of any of claims 1 - 4, wherein pushing (140) comprises actuating one push element (60) at a different time than another of the push elements (60).

6. The method of any of claims 1 - 5, wherein arranging (120) the root flange (50) comprises inserting one or more rods (62) in the root (16) of the wind turbine blade (10) and corresponding holes (58) of the root flange (50).

7. The method of any of claims 1 - 5, wherein arranging (120) the root flange (50) comprises inserting the root flange (50) in an inside (36) of the root (16) of the wind turbine blade (10).

8. The method of any of claims 1 - 7, further comprising securing the root flange (50) to the wind turbine blade root (16) after the wind turbine blade root (16) attains a suitable cross-sectional shape.

9. The method of any of claims 1 - 8, further comprising detaching the plurality of push elements (60) from the root flange (50).

10. The method of any of claims 1 - 9, wherein the wind turbine blade (10) comprises an upwind blade shell (24) and a downwind blade shell (26), the root flange (50) comprises an upwind root flange portion (51) and a downwind root flange portion (52);
wherein arranging (120) comprises attaching the upwind root flange portion (51) to the upwind blade shell (24) and attaching the downwind root flange portion (52) to the downwind blade shell (26); and
wherein the joining (130) of the push elements (60) is performed before attaching the upwind blade shell (24) and the downwind blade shell (26) to form the wind turbine blade (10).

11. An assembly (90) for adapting a cross-sectional shape of a root (16) of a wind turbine blade (10), the assembly (90) comprising:
a root flange (50) configured for a root (16) of a wind turbine blade (10); and
a plurality of push elements (60) attached to the root flange (50) such that the push elements (60) are arranged to push a wall (19) of the root (16) of the wind turbine blade (10) radially outwards.

12. The assembly of claim 11, wherein the plurality of push elements (60) is arranged in pairs of push elements, wherein each pair of push elements comprises one push element to push against an upwind blade shell (24), and another push element to push against a downwind blade shell (26).

13. The assembly of claim 12, wherein the pairs of push elements (60) are arranged in substantially diametrically opposite directions.

14. The assembly of any of claims 11 - 13, wherein the root flange (50) comprises a through hole (53) for moving one or more push elements (60) from a side of the root flange to an opposite side of the root flange.

15. The assembly of any of claims 11 - 14, wherein the root flange (50) comprises a plurality of mounting points (75), and a number of push elements (60) is less than a number of mounting points (75).

## Patentansprüche

1. Verfahren (100) zum Anpassen einer Querschnittsform einer Wurzel (16) eines Windturbinenblatts (10), wobei das Verfahren umfasst:
Bereitstellen (110) eines Wurzelflansches (50), der so konfiguriert ist, dass er an der Wurzel (16) des Windturbinenblatts (10) montiert werden kann;
Anordnen (120) des Wurzelflansches (50) mit dem Wurzel (16) des Windturbinenblatts (10);
Verbinden (130) einer Vielzahl von Schubeelementen (60) mit dem Wurzelflansch (50), wobei die Schubeelemente (60) so konfiguriert sind, dass sie eine Wand (19) der Wurzel (16) des Windturbinenblatts (10) schieben; und
Schieben (140) der Wand (19) der Wurzel (16) des Windturbinenblatts (10) mit einem oder mehreren der Schubelemente (60).

2. Verfahren nach Anspruch 1, , wobei das Verbinden (130) das Verbinden der Vielzahl von Schubelementen (60) mit einer Oberfläche (55) des Wurzelflansches (50) umfasst, die nach dem Anpassen der Querschnittsform der Wurzel (16) des Windturbinenblatts (10) einer Spitze (15) des Windturbinenblatts (10) zugewandt ist; und insbesondere mit einem Abschnitt der Oberfläche, der so konfiguriert ist, dass er einer Wurzelebene der Wurzel (16) des Windturbinenblatts (10) benachbart ist.

3. Verfahren nach Anspruch 1 oder Anspruch 2, wobei der Wurzelflansch (50) einen im Wesentlichen kreisförmigen Querschnitt aufweist, der optional ein Loch (53) in einem Kreismittelpunkt des Wurzelflansches (50) umfasst.

4. Verfahren nach einem der Ansprüche 1 bis 3, wobei das Schieben (140) das Schieben in radialer Richtung nach außen umfasst.

5. Verfahren nach einem der Ansprüche 1 bis 4, wobei das Schieben (140) die Betätigung eines Schubelements (60) zu einem anderen Zeitpunkt als ein anderes der Schubelemente (60) umfasst.

6. Verfahren nach einem der Ansprüche 1 bis 5, wobei das Anordnen (120) des Wurzelflansches (50) das Einsetzen eines oder mehrerer Stäbe (62) in die Wurzel (16) des Windturbinenblatts (10) und in entsprechende Löcher (58) des Wurzelflansches (50) umfasst.

7. Verfahren nach einem der Ansprüche 1 bis 5, wobei das Anordnen (120) des Wurzelflansches (50) das Einsetzen des Wurzelflansches (50) in eine Innenseite (36) der Wurzel (16) des Windturbinenblatts (10) umfasst.

8. Verfahren nach einem der Ansprüche 1 bis 7, ferner umfassend das Befestigen des Wurzelflansches (50) an der Windturbinenblattwurzel (16), nachdem die Windturbinenblattwurzel (16) eine geeignete Querschnittsform erreicht hat.

9. Verfahren nach einem der Ansprüche 1 bis 8, bei dem ferner die mehreren Schubelemente (60) von dem Wurzelflansch (50) gelöst werden.

10. Verfahren nach einem der Ansprüche 1 bis 9, wobei das Windturbinenblatt (10) eine Aufwind-Blattschale (24) und eine Abwind-Blattschale (26) aufweist und der Wurzelflansch (50) einen Aufwind-Wurzelflanschabschnitt (51) und einen Abwind-Wurzelflanschabschnitt (52) aufweist;
wobei das Anordnen (120) das Befestigen des Aufwind-Wurzelflanschabschnitts (51) an der Aufwind-Blattschale (24) und das Befestigen des Abwind-Wurzelflanschabschnitts (52) an der Abwind-Blattschale (26) umfasst; und
wobei das Zusammenfügen (130) der Schubelemente (60) vor dem Anbringen der Aufwind-Blattschale (24) und der Abwind-Blattschale (26) zur Bildung des Windturbinenblatts (10) erfolgt.

11. Anordnung (90) zum Anpassen einer Querschnittsform einer Wurzel (16) eines Windturbinenblatts (10), wobei die Anordnung (90) umfasst:
einen Wurzelflansch (50), der für einen Wurzel (16) eines Windturbinenblatts (10) konfiguriert ist; und
eine Vielzahl von Schubelementen (60), die an dem Wurzelflansch (50) befestigt sind, so dass die Schubelemente (60) so angeordnet sind, dass sie eine Wand (19) der Wurzel (16) des Windturbinenblatts (10) radial nach außen schieben.

12. Baugruppe nach Anspruch 11, bei der die Vielzahl von Schubelementen (60) in Paaren von Schubelementen angeordnet ist, wobei jedes Paar von Schubelementen ein Schubelement zum Schieben gegen eine Aufwind-Blattschale (24) und ein anderes Schubelement zum Schieben gegen eine Abwind-Blattschale (26) umfasst.

13. Baugruppe nach Anspruch 12, wobei die Paare von Schubelementen (60) in im Wesentlichen diametral entgegengesetzten Richtungen angeordnet sind.

14. Baugruppe nach einem der Ansprüche 11 bis 13, wobei der Wurzelflansch (50) ein Durchgangsloch (53) aufweist, um ein oder mehrere Schubelemente (60) von einer Seite des Wurzelflansches zu einer gegenüberliegenden Seite des Wurzelflansches zu bewegen.

15. Baugruppe nach einem der Ansprüche 11 bis 14, wobei der Wurzelflansch (50) eine Vielzahl von Befestigungspunkten (75) aufweist und die Anzahl der Schubelemente (60) geringer ist als die Anzahl der Befestigungspunkte (75).

## Revendications

1. Procédé (100) pour adapter la forme de la section transversale d'une racine (16) d'une pale d'éolienne (10), comprenant :
fournir (110) une bride de racine (50) configurée pour être montée à la racine (16) de la pale d'éolienne (10) ;
arranger (120) la bride de racine (50) avec la racine (16) de la pale d'éolienne (10) ;
assembler (130) une pluralité d'éléments de poussée (60) à la bride de racine (50), les éléments de poussée (60) étant configurés pour pousser une paroi (19) de la racine (16) de la pale d'éolienne (10) ; et
pousser (140) la paroi (19) de la racine (16) de la pale d'éolienne (10) avec un ou plusieurs éléments de poussée (60).

2. Procédé de la revendication 1, dans lequel assembler (130) comprend l'assembler de la pluralité d'éléments de poussée (60) à une surface (55) de la bride de racine (50) qui, lors de l'adaptation de la forme de la section transversale de la racine (16) de la pale d'éolienne (10), fait face à une extrémité (15) de la pale d'éolienne (10) ; et spécifiquement à une partie de la surface configurée pour être adjacente à un plan de racine de la racine (16) de la pale d'éolienne (10).

3. La méthode de la revendication 1 ou de la revendication 2, dans laquelle la bride de racine (50) a une section transversale sensiblement circulaire, comprenant éventuellement un trou (53) dans un centre de cercle de la bride de racine (50).

4. La méthode de l'une des revendications 1 à 3, dans laquelle pousser (140) comprend pousser radialement vers l'extérieur.

5. La méthode de l'une des revendications 1 à 4, dans laquelle pousser (140) consiste à actionner un élément de poussée (60) à un moment différent de celui d'un autre élément de poussée (60).

6. Méthode de l'une des revendications 1 à 5, dans laquelle la disposition (120) de la bride de racine (50) comprend l'insertion d'une ou plusieurs tiges (62) dans la racine (16) de la pale d'éolienne (10) et dans les trous correspondants (58) de la bride de racine (50).

7. Le procédé de l'une des revendications 1 à 5, dans lequel la disposition (120) de la bride de racine (50) comprend l'insertion de la bride de racine (50) à l'intérieur (36) de la racine (16) de la pale d'éolienne (10).

8. Le procédé de l'une des revendications 1 à 7, comprenant en outre la fixation de la bride de racine (50) à la racine de la pale d'éolienne (16) une fois que la racine de la pale d'éolienne (16) a atteint une forme de section transversale appropriée.

9. La méthode de l'une des revendications 1 à 8, comprenant en outre le détachement de la pluralité d'éléments de poussée (60) de la bride de racine (50).

10. Le procédé de l'une des revendications 1 à 9, dans lequel la pale d'éolienne (10) comprend une coque de pale au vent (24) et une coque de pale sous le vent (26), la bride de racine (50) comprend une partie de bride de racine au vent (51) et une partie de bride de racine sous le vent (52) ;
dans lequel la disposition (120) comprend la fixation de la partie de la bride de racine au vent (51) à la coque de la pale au vent (24) et la fixation de la partie de la bride de racine au vent (52) à la coque de la pale au vent (26) ; et
dans lequel l'assemblage (130) des éléments de poussée (60) est effectué avant de fixer la coque de la pale au vent (24) et la coque de la pale sous le vent (26) pour former la pale de l'éolienne (10).

11. Ensemble (90) pour adapter la forme de la section transversale d'une racine (16) d'une pale d'éolienne (10), l'ensemble (90) comprenant :
une bride de racine (50) configurée pour une racine (16) d'une pale d'éolienne (10) ; et
une pluralité d'éléments de poussée (60) fixés à la bride de racine (50) de telle sorte que les éléments de poussée (60) sont disposés à pousser une paroi (19) de la racine (16) de la pale d'éolienne (10) radialement vers l'extérieur.

12. L'ensemble de la revendication 11, dans lequel la pluralité d'éléments de poussée (60) est disposée en paires d'éléments de poussée, chaque paire d'éléments de poussée comprenant un élément de poussée pour pousser contre une coque de pale au vent (24), et un autre élément de poussée pour pousser contre une coque de pale sous le vent (26).

13. L'ensemble de la revendication 12, dans lequel les paires d'éléments de poussée (60) sont disposées dans des directions sensiblement diamétralement opposées.

14. L'ensemble de l'une des revendications 11 à 13, dans lequel la bride de racine (50) comprend un trou de passage (53) pour déplacer un ou plusieurs éléments de poussée (60) d'un côté de la bride de racine à un côté opposé de la bride de racine.

15. L'ensemble de l'une des revendications 11 à 14, dans lequel la bride de racine (50) comprend une pluralité de points de montage (75), et le nombre d'éléments de poussée (60) est inférieur au nombre de points de montage (75).
